(19) Europäisches Patentamt
European Patent Office
Office européen des brevets

(11) **EP 2 840 414 B1**

(12) **EUROPÄISCHE PATENTSCHRIFT**

(45) Veröffentlichungstag und Bekanntmachung des Hinweises auf die Patenterteilung:
**03.06.2020   Patentblatt 2020/23**

(51) Int Cl.:
**G01S 17/32** *(2006.01)*  **F41H 13/00** *(2006.01)*
**F41G 7/22** *(2006.01)*  **G01S 7/495** *(2006.01)*

(21) Anmeldenummer: **14002733.5**

(22) Anmeldetag: **05.08.2014**

(54) **Verfahren zum Schützen eines Schutzobjekts**

Method for protecting an object needing protection

Procédé destiné à protéger un objet

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.08.2013   DE 102013014192**

(43) Veröffentlichungstag der Anmeldung:
**25.02.2015   Patentblatt 2015/09**

(73) Patentinhaber: **Diehl Defence GmbH & Co. KG 88662 ÜBERLINGEN (DE)**

(72) Erfinder:
• **Tholl, Hans Dieter 88682 Salem (DE)**
• **Reischmann, Hans-Ludwig 88662 Überlingen (DE)**

(74) Vertreter: **Diehl Patentabteilung c/o Diehl Stiftung & Co. KG Stephanstraße 49 90478 Nürnberg (DE)**

(56) Entgegenhaltungen:
EP-A1- 2 626 722   DE-A1- 4 124 428
FR-A1- 2 535 466   US-A1- 2012 068 874

EP 2 840 414 B1

**Beschreibung**

Die Erfindung betrifft ein Verfahren zum Schützen eines Schutzobjekts gegen einen Angriff eines anfliegenden Flugobjekts, das einen Sucher aufweist. Es wird eine Lasereinheit auf das Flugobjekt gerichtet und die Lasereinheit sendet Störstrahlung mit einem Störcode, der eine Zielerfassung des Suchers des anfliegenden Flugobjekts stört.

Bei asymmetrischen Konflikten sind Luftfahrzeuge besonders bei Starts und Landungen durch Ein-Mann Boden-Luft-Raketen gefährdet. Solche Flugabwehrraketen sind von einer Person tragbar, leicht zu bedienen und bei einem Treffer sehr wirksam. Bessere Flugabwehrraketen sind mit einem Suchkopf ausgerüstet, der in der Regel Wärmequellen detektiert und auf diese zufliegt, beispielsweise Triebwerke eines Passagierflugzeugs. Zivilflugzeuge und Transportflugzeuge sind wegen ihrer Größe, ihrer langsamen Fluggeschwindigkeit und ihrer Wehrlosigkeit besonders gefährdet. Zur Verringerung solcher Gefahren ist es wünschenswert, Suchköpfe anfliegender Boden-Luft-Raketen stören zu können.

Aus der Militärtechnik sind aktive Methoden zur Störung von Infrarot-Suchköpfen anfliegender Raketen bekannt. So werden beispielsweise Laserpulse mit hoher Energie auf den Suchkopf gerichtet, die die Suchkopfelektronik stören oder sogar zerstören. Die anfliegende Flugabwehrrakete kann das von ihr anvisierte heiße Ziel nicht mehr finden und verfehlt es hierdurch.

In der US 2012/0068874 A1 wird ein System für gerichtete Infrarot-Gegenmaßnahmen beschrieben, das mittels eines Lasers Störcodes gegen wärmegesteuerte Flugkörper aussendet und über einen Detektor zur Bestimmung der Entfernung zu einem Flugkörper verfügt, wobei die Entfernungsmessung per Laufzeitmessung über Detektion eines am Flugkörper reflektierten Laserimpulses erfolgt.

Die DE 41 24 428 A1 beschäftigt sich mit einem System zur Erkennung und zur Beantwortung einer Luftbedrohung. Es wird vorgeschlagen, dass mit einem Impuls-Laser-Entfernungsmesser die Entfernung zu einem Angreifer bestimmt wird, um die Entfernung zu ermitteln, ab welcher ein Blendungs-Laser einsetzbar ist. Es kann aber auch vorgesehen sein, den Impuls-Laser-Entfernungsmesser zur Störung eines gegnerischen Bildaufnehmers einzusetzen.

Es ist eine Aufgabe der vorliegenden Erfindung, ein Verfahren zum Schützen eines Schutzobjekts anzugeben, mit dem das Schutzobjekt besser geschützt werden kann.

Diese Aufgabe wird durch ein Verfahren gemäß Patentanspruch 1 gelöst, bei dem die Lasereinheit mit einem Modulationscode modulierte Messstrahlung zum Flugobjekt sendet, vom Flugobjekt reflektierte Messstrahlung erfasst, mit dem Modulationscode korreliert und aus der Korrelation auf die Entfernung zum Flugobjekt rückgeschlossen wird.

Die Erfindung geht von der Überlegung aus, dass zur Störung von Suchern Laser verwendet werden, die Pulse mit hoher Pulsspitzenleistung und mit einer Pulswiederholrate im kHz-Bereich aussenden. Für eine gute Flugkörperabwehr ist jedoch neben der Störung auch die Kenntnis der Entfernung zum anfliegenden Flugobjekt vorteilhaft. Je nach Entfernung können weitere Abwehrmaßnahmen initiiert oder gegebenenfalls Fluchtmanöver begonnen werden. Eine Entfernungsmessung mittels eines Lasers erfolgt üblicherweise durch das Puls-Laufzeitverfahren. Hierbei erfordert das Puls-Laufzeitverfahren starke Pulsspitzenleistungen, um genügend reflektiertes Signal empfangen zu können, da eine anfliegende Luftabwehrrakete im Verhältnis zur Umgebung sehr klein und außerdem weit vom Schutzobjekt entfernt ist. Die Pulsspitzenleistung von Störlasern ist für eine solche Entfernungsmessung ausreichend.

Die Erfindung geht von der weiteren Überlegung aus, dass zur Störung von Suchköpfen auch Pulswiederholfrequenzen im MHz-Bereich vorteilhaft sein können. Laser mit einer so hohen Pulswiederholrate haben jedoch eine geringere Pulsspitzenleistung. Dies kann bei einem geringen Streuungsquerschnitt, also bei weit entferntem und gerade anfliegenden Flugkörper dazu führen, dass Reflexionssignale zu gering sind, um das Puls-Laufzeitverfahren auszuführen.

Entsprechend der Erfindung wird mit einem Modulationscode modulierte Messstrahlung zum Flugobjekt gesendet. Die Messstrahlung muss hierbei kein kurzer Puls mit einer hohen Pulsspitzenleistung sein, sondern kann relativ lang andauernd zum Flugobjekt gesendet werden. Entsprechend kann auch die reflektierte Messstrahlung über einen längeren Zeitraum empfangen und zweckmäßigerweise aufsummiert werden. Hierdurch kann mit viel schwächerer Pulsleistung gearbeitet werden, da die zur Auswertung notwendige Empfangsenergie nicht auf einen Puls beschränkt ist, sondern auf einen länger andauernden Modulationscode verteilt werden kann. Auf eine hohe Laserpulsleistung kann verzichtet werden und es können Laser mit hoher Pulswiederholrate verwendet werden.

Das Schutzobjekt kann jedes geeignete und zu schützende Objekt sein, wobei ein Luftfahrzeug besonders vorteilhaft ist. Als anfliegendes Flugobjekt kommen in der Regel Lenkwaffen in Betracht, insbesondere raketengetriebene Lenkwaffen, wie Boden-Luft-Raketen, Boden-Boden-Raketen, Luft-Luft-Raketen oder dergleichen.

Der Sucher kann ein Infrarot-Sucher sein, der auf Infrarotstrahlung sensitiv reagiert und zweckmäßigerweise Teil eines Lenksystems ist, das das Flugobjekt entsprechend der Sucherinformation lenkt, insbesondere auf eine Wärmequelle hin.

Die Lasereinheit kann Teil des Schutzobjekts sein oder von einer dritten Einheit, beispielsweise einer Flughafeneinheit, zur Verfügung gestellt werden. Die Lasereinheit umfasst eine oder mehrere Laserquellen zum Aussenden der Störstrahlung und der Messstrahlung.

Die Lasereinheit kann durch eine entsprechende Bewegung auf das Flugobjekt gerichtet werden.

Die Störstrahlung ist zweckmäßigerweise infrarote Strahlung und kann in ihrer Frequenz auf den Sucher abgestimmt sein, so dass der Sucher in der Frequenz der Störstrahlung sensitiv ist. Der Störcode kann jeder zum Stören des Suchers geeignete Code sein, wobei einzelne Pulse, Störinformation tragende Signalfolgen oder andere geeignete Signale beziehungsweise Codes in Betracht kommen. Die Störung kann durch Blendung, Zerstörung, Irreführung oder andere geeignete Methoden erfolgen. Eine Störung der Zielerfassung erfolgt, indem der Sucher das Schutzobjekt nicht mehr verfolgen kann oder dies nicht mehr tut, auch wenn es noch möglich wäre.

Die Messstrahlung ist Laserstrahlung, zweckmäßigerweise im infraroten Spektralbereich. Die Erfassung der reflektierten Messstrahlung geschieht zweckmäßigerweise auf einem Detektor, insbesondere einem Einelementdetektor. Die Messstrahlung wird vom Flugobjekt reflektiert, wobei hierunter auch eine Rückstreuung verstanden werden soll.

Die reflektierte und von einem Empfänger empfangene Messstrahlung - im Folgenden auch Messsignal oder Messsignalzug genannt - wird mit dem Modulationscode korreliert. Um die Beschreibung zu vereinfachen, wird der Modulationscode, mit dem die reflektierte Messstrahlung korreliert wird, auch als Korrelationscode bezeichnet. Der zur Korrelation verwendete Korrelationscode ist zweckmäßigerweise der gleiche Modulationscode, der zur Modulation der Messstrahlung verwendet wird bzw. wurde. Allerdings kann der Modulationscode des Empfangssignals außer Phase mit dem Korrelationscode sein. Es ist vorteilhaft, wenn der zur Korrelation eines eintreffenden Signals verwendete Korrelationscode exakt der Modulationscode ist, der das eintreffende Signal beim Aussenden moduliert hat. Bei einem zeitlich gleich bleibenden Modulationscode kann dieser im Hintergrund weiterlaufen und beim Eintreffen des empfangenen Signals zur Korrelation verwendet werden. Ändert sich der Modulationscode mit der Zeit, so wird zur Modulation zweckmäßigerweise auf den früheren Modulationscode zurückgegriffen, der das Signal geformt hat.

Die Korrelation kann einen Vergleich des Messsignals mit dem Korrelationscode umfassen. Besonders vorteilhaft ist eine Faltung oder Multiplikation des empfangenen Messsignals mit dem Korrelationscode. Bei der Korrelation wird das Messsignal zweckmäßigerweise nicht nur einfach mit dem Korrelationscode korreliert, sondern mehrfach, wobei der Korrelationscode zwischen den Vergleichen jeweils um ein vorbestimmtes Zeitintervall zum Sendezeitpunkt des Messsignals verschoben wird. Jede Korrelation führt zu einem Korrelationsergebnis, wobei das maximale der Korrelationsergebnisse die beste Überdeckung von Messsignal mit Korrelationssignal anzeigt. Die Korrelation mit dem maximalen Korrelationsergebnis zeigt die Phasenlage des Korrelationscodes zum ausgesandten Modulationscode an und damit die Zeitdifferenz zwischen Aussenden der Messstrahlung und Empfangen der reflektierten Messstrahlung. Die Zeitdifferenz ist die Laufzeit der Messstrahlung, aus der die Entfernung ermittelt wird.

Das korrelierte Messsignal wird zweckmäßigerweise über einen vorgegebenen Zeitraum summiert beziehungsweise integriert, so dass auch schwache Messsignale zuverlässig ausgewertet werden können. Aus der Korrelation wird auf die Entfernung zum Flugobjekt rückgeschlossen, wobei hierfür die Laufzeit der Messstrahlung von der Lasereinheit zum Flugobjekt und zurück zur Messeinheit zur Bestimmung des Abstands verwendet werden kann. Durch die Korrelation kann ferner eine Phasenbestimmung des Korrelationscodes der eintreffenden Messstrahlung erfolgen, zweckmäßigerweise eine Phasenverschiebung des Korrelationscodes zum gesendeten Modulationscode. Hierunter kann auch ein Erkennen verstanden werden, dass das eintreffende Messsignal in Phase mit dem Modulationscode ist.

Der Modulationscode ist gemäß der Erfindung jede geeignete regelmäßige oder unregelmäßige Modulation der Messstrahlung in Form einer Vielzahl von hintereinander gesendeten Signalen in zusammenhängenden Signalzügen. Die Signale können geometrisch gleichmäßige Pulse, z.B. Rechteckpulse, Dreieckpulse, Sinuspulse oder dergleichen sein, oder ungleichmäßige Pulse. Entsprechend können generell die Signalzüge Pulszüge sein. Besonders geeignet sind Pulse zwischen denen die Sendeleistung auf zumindest im Wesentlichen Null abfällt. Die Signale bzw. Pulse können gleich oder verschieden voneinander sein, wobei eine unregelmäßige Signalabfolge besonders vorteilhaft ist.

Während die Störung vielfach durch Blendung erfolgt, besteht auch die Möglichkeit, die Störstrahlung mit einem solchen Störcode zu versehen, der ein Täuschen des Suchers erreicht. Eine solche Täuschung lässt sich mit verhältnismäßig geringer Laserleistung durchführen. Ein Blenden oder Zerstören des Suchers ist - zumindest in einem anfänglichen Stadium des Angriffs - nicht notwendig. Um nicht für die Entfernungsmessung eine starke Laserquelle vorhalten zu müssen, ist es vorteilhaft, wenn die Messstrahlung von einer Laserquelle aus gesendet wird, die zumindest der Laserquelle der Störstrahlung ähnlich ist, so dass die Lasereinheit einfach gehalten werden kann. Auf verschiedene Arten von Laser kann verzichtet werden. Entsprechend sendet die Lasereinheit die Messstrahlung ebenfalls mit relativ geringer Energie und greift auf die Modulation und Korrelation zurück, um eine zuverlässige Entfernungsmessung zu erreichen.

Die Störstrahlung und die Messstrahlung beziehungsweise der Störcode und der Modulationscode werden von der gleichen Laserquelle gesendet. Hierdurch kann die Lasereinheit einfach gehalten und günstig ausgeführt werden. Ein besonderer Vorteil liegt außerdem darin, dass die Lasereinheit besonders kompakt gehalten werden kann.

Die Störstrahlung wird als Messstrahlung verwendet. Der Störcode und der Modulationscode werden mit gleicher Strahlungsfrequenz gesendet. Die Lasereinheit kann einfach und kompakt gehalten bleiben. Die Strahlungsfrequenz liegt zweckmäßigerweise im infraroten Spektralbereich.

Insbesondere zur Generierung eines Störcodes, der eine Täuschung des Suchkopfs erzeugt, ist eine Laserquelle vorteilhaft, die über eine sehr hohe Pulswiederholrate verfügt. Vorteilhaft ist eine Pulswiederholrate von zumindest 500 kHz. Höhere Pulsraten von z. B. 1 MHz sind durchaus wünschenswert. Energetisch vorteilhaft ist hierbei eine Größenordnung der Laserpulse von zumindest 100 ns. Hierdurch kann der Störcode besonders flexibel und präzise erstellt werden. Auch für die Entfernungsmessung ist eine sehr hohe Pulswiederholrate im Megahertzbereich vorteilhaft. Zum Erreichen zumindest einer dieser Qualitäten wird das Messsignal zweckmäßigerweise von einem Halbleiterlaser gesendet. Die Lasereinheit umfasst somit einen Halbleiterlaser, beispielsweise einen nahezu konstanten Halbleiterlaser (Quasi-CW Halbleiterlaser), dessen Strahlungsabgabe infolge hoher Pulsfrequenz und langer Pulsdauer über die Zeit nahezu gleichmäßig ist. Die Laserquelle kann eine Quantenkaskadenlaserquelle oder eine Scheibenlaserquelle sein.

Um die Optik der Lasereinheit einfach halten zu können, ist es vorteilhaft, wenn die Pulsspitzenleistung beim Senden des Entfernungsmesssignals maximal 1 kW beträgt. Eine Vergütung der Optik kann im üblichen Bereich bleiben und es können Normteile verwendet werden. Trotz dieser geringen Leistung kann eine Entfernungsmessung in einem Entfernungsbereich über 1 Kilometer, insbesondere über 5 Kilometer erfolgen. Hierbei kann das in seiner Entfernung gemessene Flugobjekt einen Raumwinkel < 0,01°, insbesondere < 0,001° aufweisen.

Entsprechend der Erfindung wird die Messstrahlung in einer Vielzahl von zweckmäßigerweise gleichen Signalzügen, insbesondere Pulszügen gesendet wird. Entsprechend wird eine Vielzahl von reflektierten Signalzügen empfangen und ausgewertet. Durch eine Summation von empfangener Energie, zweckmäßigerweise aus dem gesamten Signalzug, kann dieser auch sehr schwach sein und trotzdem einen auswertbaren Messwert bzw. Messpunkt liefern. Hierbei wird vorteilhafterweise aus jedem reflektierten und empfangenen Signalzug ein einziger Messwert ermittelt.

Weiter ist es vorteilhaft, wenn die reflektierte Messstrahlung einer Vielzahl von Signalzügen korreliert und das Korrelationsergebnis der Signalzüge summiert wird. Selbst wenn ein Signal eines Signalzugs zu schwach ist, um es zuverlässig aus einem Rauschen extrahieren zu können, kann diese Summe über viele Signalzüge zu einem deutlichen Signal führen, so dass eine Entfernungsbestimmung ermöglicht wird. Hierzu sollten die Signalzüge gleich sein, um ein eindeutiges Ergebnis der Summation zu erreichen.

Vorteilhafterweise sind die Signalzüge jeweils nur mit einem regelmäßigen Muster moduliert, das heißt, die Pulse eines Pulszugs weisen alle die gleiche Musterform auf. Die Musterform kann ein Rechteckmuster, ein Sinusmuster, ein Dreieckmuster oder ein anderes Muster sein. Die entsprechenden Pulse des Musters sind zweckmäßigerweise gleichartig in Form und Amplitude, können aber eine unregelmäßige Modulation aufweisen, so dass die Abstände benachbarter Pulse zueinander und die Pulslängen unterschiedlich sein können. Diese Ausführungsform ist sehr energieeffizient, sodass auch sehr schwach empfangene Strahlung zuverlässig ausgewertet werden kann.

Eine weitere vorteilhafte Ausführungsform der Erfindung schlägt vor, dass die Signalzüge eine unregelmäßige Modulation aufweisen. Die Signalzüge können hierbei untereinander alle gleich oder zweckmäßigerweise verschieden ausgeführt sein. Wichtig ist, dass innerhalb eines Signalzugs ein unregelmäßiges Muster auftritt. Hierdurch kann eine besonders schnelle und genaue Entfernungsmessung erfolgen, da eine Korrelation ein einziges und scharfes Zeitsignal liefern kann, aus dem auf einfache Weise auf die Entfernung rückgeschlossen werden kann. Die Unregelmäßigkeit kann eine Unregelmäßigkeit in der Amplitude, der Pulslänge und/oder des zeitlichen Abstands zwischen den Pulsen sein.

Weiter ist es vorteilhaft, dass die Signalzüge in ihrer Modulation so geformt sind, dass die Korrelation mit dem gleichen Korrelationsmuster nicht nur zu einem einzigen Hauptmaximum bei einer exakten Überdeckung von Signalzug und Korrelationszug führt, sondern gezielt mindestens ein deutlich auswertbares Nebenmaximum entsteht, wenn Signalzug und Korrelationszug einander in vorbestimmter Weise überdecken. Hierdurch kann ein Signalzug in mehrere Unterzüge aufgeteilt werden, die jeweils als einzelner Signalzug bei der Auswertung zur Ermittlung der Entfernung herangezogen werden können. Zwar wird hierdurch der Entfernungsmessbereich der eine eindeutige Entfernung liefert, verkleinert, so dass dieses Verfahren zweckmäßigerweise herangezogen wird, wenn der Flugkörper bereits nahe am Schutzobjekt ist. Allerdings kann jedes Maximum aufsummiert werden, so dass über mehr Maxima summiert wird, so dass das Signal-Rausch-Verhältnis (SNR) verbessert wird. Gegebenenfalls kann außerdem eine Entfernungsmessung beschleunigt werden, da ein Maximum zügiger aufgefunden werden kann.

In einer nicht unter die Erfindung fallenden Ausgestaltung wird das Senden des Modulationscodes zum Senden des Störcodes unterbrochen. Üblicherweise wird das Senden des Störcodes in der Priorität höher eingestuft sein als die Entfernungsbestimmung. Insofern kann zunächst der Modulationscode gesendet werden, wenn z.B. eine Störung noch nicht erfolgen soll. Wenn die Störung beginnen soll, wird die Sendung des Modulationscodes als einziger Code beendet und die Störung beginnt.

Entsprechend der Erfindung wird die Störstrahlung als Messstrahlung verwendet. Auf die Aussendung von zwei Strahlen oder eine Ausführung hintereinander kann verzichtet werden. Der Modulationscode kann in einer nicht unter die Erfindung fallenden Ausgestaltung vom Störcode verschieden sein, z.B. bei einer Überlagerung der beiden Codes.

Entsprechend der Erfindung ist vorgesehen, dass der Störcode als Modulationscode verwendet wird. Auf eine Erzeugung eines separaten Modulationscodes kann verzichtet werden und das reflektierte Störsignal kann zur Entfernungsmessung verwendet werden. Störstrahlung und Entfernungs-Messstrahlung sind in diesem Fall eins. Der Störcode kann auch zur Korrelation verwendet werden, er ist also auch der Modulationscode der Korrelation.

Je nach Störverfahren kann es vorkommen, dass der Störcode in kurzen Zeitintervallen verändert wird. Um zur Korrelation den richtigen Störcode zu verwenden, ist es sinnvoll, zumindest den ungefähren Abstand zum Flugobjekt zu kennen, um zu wissen, mit welchem Code moduliert werden muss. Um dies zu erreichen, ist es vorteilhaft, wenn zunächst eine Entfernungsmessung ohne das Senden des Störcodes erfolgt und dann die Entfernungsmessung aus der Reflexion der Störstrahlung bestimmt wird, insbesondere aus der Reflexion des Störcodes. Die Entfernung kann zuverlässig ohne das Senden des Störcodes bestimmt werden, wobei ein Entfernungstracking zeitgleich mit der der Störung erfolgen kann. Die Entfernung kann zunächst bestimmt und dann im Laufe des Anflugs des Flugobjekts getrackt werden, wobei das Tracking anhand der reflektierten Störstrahlung erfolgen kann. Die Entfernung ist im Wesentlichen bekannt und der Wechsel des Korrelationscodes kann jeweils zum richtigen Zeitpunkt durchgeführt werden.

Eine weitere Form der Verwendung der Störstrahlung als Entfernungsmessstrahlung kann in einer nicht unter die Erfindung fallenden Ausführungsform erfolgen, indem der Modulationscode auf den Störcode aufmoduliert wird. Die Störstrahlung ist also die Entfernungsmessstrahlung, die beiden Codes sind jedoch unterschiedlich. Modulationscode und Störcode können überlagert werden. Auf diese Weise kann der Störcode auf eine besonders vorteilhafte, also eindeutige und genaue Entfernungsmessung abgestimmt werden. Zweckmäßigerweise weist der Modulationscode eine höhere Pulsfrequenz auf als der Störcode. Hierbei kann ein Störpuls aus einer Mehrzahl von Modulationspulsen zusammengesetzt sein. Insbesondere wird ein Störpuls als ein Signalzug für die Entfernungsmessung verwendet.

Zweckmäßigerweise wird die Entfernungsinformation von der Störinformation getrennt, um eine zuverlässige Entfernungsmessung durchzuführen. Eine solche Informationstrennung kann erfolgen, indem der Modulationscode bei der Auswertung des reflektierten Signals durch Frequenztrennung vom Störcode getrennt wird.

Außerdem ist die Erfindung gerichtet auf eine Schutzvorrichtung zum Schützen eines Schutzobjekts gegen einen Angriff eines anfliegenden Flugobjekts gemäß den Merkmalen von Patentanspruch 8. Die Schutzvorrichtung umfasst eine Lasereinheit und ein Modulationsmittel zum Aufmodulieren eines Störcodes auf von der Lasereinheit erzeugte Laserstrahlung zum Stören einer Zielerfassung eines Suchers des anfliegenden Flugobjekts.

Es wird vorgeschlagen, dass die Schutzvorrichtung ein Auswertemittel aufweist, wobei das Modulationsmittel dazu vorbereitet ist, einen Modulationscode auf von der Lasereinheit erzeugte Laserstrahlung aufzumodulieren und das Auswertemittel dazu vorbereitet ist, vom Flugobjekt reflektierte Messstrahlung zu erfassen und mit dem Modulationscode zu korrelieren und aus der Korrelation auf die Entfernung zum Flugobjekt zurückzuschließen. Zusätzlich zur Störung des Suchers des anfliegenden Flugobjekts kann mit einfachen Mitteln eine Entfernungsmessung zum Flugobjekt durchgeführt werden.

Die Schutzvorrichtung umfasst zweckmäßigerweise eine Steuereinheit, die vorteilhafterweise dazu vorbereitet ist, die Durchführung eines beliebigen, mehrerer beliebiger oder aller der oben genannten Verfahrensschritte zu steuern. Eine solche Vorbereitung kann durch ein oder mehrere entsprechende Steuerprogramme der Steuereinheit vorliegen, dessen oder deren Ablauf - beispielsweise in Verbindung mit geeigneten Eingangssignalen, wie Sensorsignalen - eine solche Steuerung bewirkt. Hierzu umfasst das Steuermittel zweckmäßigerweise elektronische Elemente, wie einen Prozessor und Datenspeicher, die zum Ablaufen des Steuerprogramms notwendig sind. Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren und der erfindungsgemäßen Vorrichtung gemäß den unabhängigen Ansprüchen kombinierbar.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht im Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:

FIG 1 einen Lenkflugkörper im Anflug auf ein Passagierflugzeug, das eine Schutzvorrichtung mit einer Lasereinheit aufweist,

FIG 2 ein Schema einer Messstrahlung, die von der Lasereinheit auf den Lenkflugkörper gerichtet wird zum Messen der Entfernung zwischen dem Passagierflugzeug und dem Lenkflugkörper,

FIG 3 mehrere aus der Messstrahlung gewonnenen Messwerte aufgetragen gegen die Lichtflugzeit,

FIG 4 drei Signalzüge mit verschiedenem Modulationscode,

FIG 5 ein Diagramm von Messwerten, die aus einer Vielzahl von Korrelationen mit unregelmäßigen Signalzügen gewonnen wurden,

FIG 6 ein Diagramm von Messwerten mit einem Haupt- und mehreren Nebenmaxima,

FIG 7 ein Diagramm von ausgesendeter Störstrahlung, der modulierte Messstrahlung vorausgeht,

FIG 8 ein Diagramm, das auf einen regelmäßigen Störcode aufmodulierten Modulationscode zeigt und

FIG 9 ein Diagramm, das auf einen unregelmäßigen Störcode aufmodulierten Modulationscode zeigt.

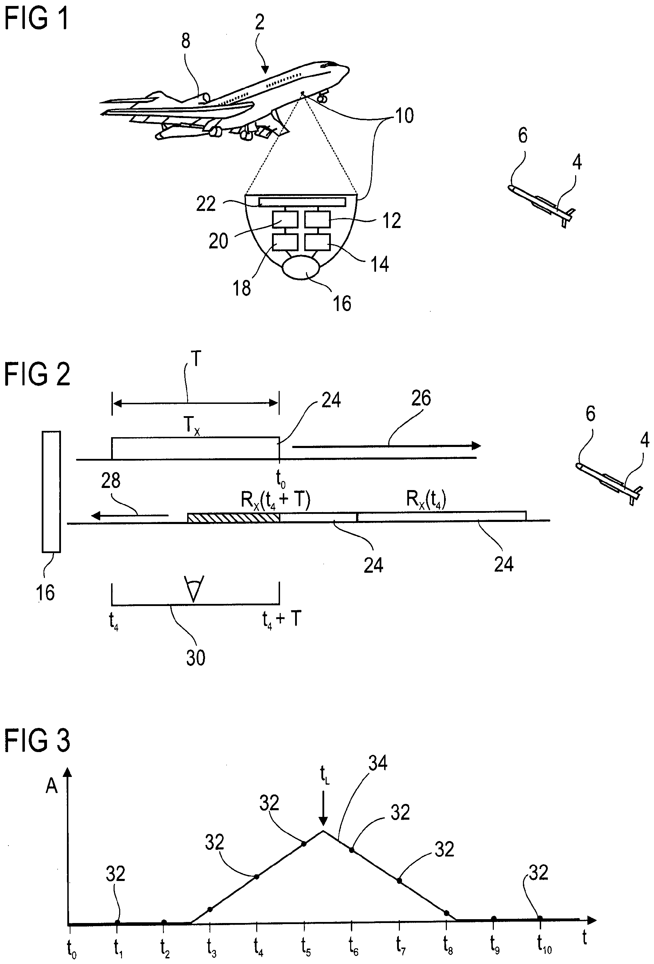

FIG 1 zeigt ein Schutzobjekt 2 in Form eines Passagierflugzeugs, das sich in einem Landeanflug auf einen Flughafen befindet. Das Passagierflugzeug wird von einem Flugobjekt 4 angeflogen, das ein Lenkflugkörper mit einem Sucher 6 ist. Das Flugobjekt 4 hat eine Sprengladung zum Zerstören des Schutzobjekts 2, wobei der Sucher 6 zum Erkennen und Verfolgen von Wärmequellen, beispielsweise des Triebwerks 8 des Passagierflugzeugs, ausgebildet ist. Der Lenkflugkörper ist eine Ein-Mann-Flugabwehrrakete zum Bekämpfen von Luftzielen und ist zum Abschuss des Passagierflugzeugs von einem manuellen Startgerät gestartet worden.

Zur Verteidigung gegen das Flugobjekt 4 enthält das Schutzobjekt 2 eine Schutzvorrichtung 10, die in FIG 1 unterhalb des Passagierflugzeugs der Übersichtlichkeit halber vergrößert und schematisch dargestellt ist. Die Schutzvorrichtung 10 umfasst eine Lasereinheit 12 mit einem Halbleiterlaser, der als Quantenkaskadenlaser zum Senden von 100 ns Pulsen und einer Wiederholrate von 1,0 MHz vorbereitet ist. Weiter enthält die Schutzvorrichtung 10 eine Modulationseinheit 14 zum Aufprägen einer Modulation auf die von der Lasereinheit 12 erzeugte Laserstrahlung. Die Modulation kann ein Modulationscode für ausgesendete Messstrahlung und/oder ein Störcode für ausgesendete Störstrahlung sein.

Über eine Sende- und Empfangseinheit 16 mit einer Strahlformungsoptik zum Aussenden der Laserstrahlung, beispielsweise in Richtung des Flugobjekts 4, wird die modulierte Laserstrahlung ausgesendet und von der Umgebung reflektierte Laserstrahlung empfangen. Reflektierte und von der Sende- und Empfangseinheit 16 empfangene Laserstrahlung wird zu einem Empfangssignal verarbeitet, das von einer Korrelationseinheit 18 mit dem Korrelationscode, also dem Modulationscode aus dem Modulationsmittel 14 korreliert wird. Aus der Korrelation resultierende Messwerte werden einem Auswertemittel 20 zugeführt, das aus den Messwerten einen Abstand von der Schutzvorrichtung 10 zum Flugobjekt 4 berechnet. Den Einheiten 12-20 ist eine Steuereinheit 22 übergeordnet, die signaltechnisch mit diesen Einheiten 12-20 verbunden ist. Die Steuereinheit 22 steuert die Lasereinheit 12 in der Erzeugung der Laserstrahlung und auch das Modulationsmittel 14, das auf die Steuersignale der Steuereinheit 22 hin den Modulationscode und/oder den Störcode erzeugt. Weiter steuert die Steuereinheit 22 die Sende- und Empfangseinheit 16 und die Korrelationseinheit 18, indem sie beispielsweise Zeitfenster in zeitlicher Lage und Größe sowie die Art der Korrelation vorgibt. Daten vom Auswertemittel 20 werden an die Steuereinheit 22 gegeben zur weiteren Verarbeitung.

Die Schutzvorrichtung 10 übernimmt unter anderem zwei Aufgaben: Die Störung des Suchers 6 durch Störstrahlung und die Messung der Entfernung zum Flugobjekt 4 beziehungsweise Sucher 6 mit Hilfe von Messstrahlung. Störstrahlung und Messstrahlung können unterschiedliche oder gleiche Strahlung sein. Das Senden der Störstrahlung und der Messstrahlung erfolgt in diesem Beispiel mit gleicher Strahlungsfrequenz. Im Folgenden wird zunächst das Entfernungsmessverfahren erläutert.

FIG 2 zeigt ein vereinfachtes Schema des Aussendens und Empfangens von Messstrahlung. Von der Lasereinheit 12 wird Laserstrahlung erzeugt, die vom Modulationsmittel 14 in mehrere Signalzüge 24 gleicher Zuglänge $T = 40~\mu s$ eingeteilt wird. Zwischen einander nachfolgenden Signalzügen 24 ist eine Sendepause ohne ausgesendete Laserstrahlung oder mit einer vorgegebenen Amplitude unterhalb eines Amplitudengrenzwertes. Die Signalzüge 24 werden als Sendestrahlung $T_X$ von der Sende- und Empfangseinheit 16 ausgesendet, beispielsweise in Richtung des Flugobjekts 4, wie in FIG 2 durch den Pfeil 26 angedeutet ist. Dort wird die Sendestrahlung $T_X$ reflektiert und erreicht als Empfangsstrahlung $R_X$ nach einer Weile wieder die Sende- und Empfangseinheit 16, die die Empfangsstrahlung $R_X$ empfängt und zum Empfangssignal verarbeitet. FIG 2 zeigt den reflektierten Signalzug 24 als Empfangsstrahlung $R_X$ zum Zeitpunkt $t_4$. Zu diesem Zeitpunkt hat er die Sende- und Empfangseinheit 16 noch nicht erreicht und fliegt auf diese zu, wie durch den Pfeil 28 angedeutet ist.

Die Sendestrahlung $T_X$ ist in diesem einfachen Beispiel mit einem rechteckförmigen Modulationscode moduliert, der nur einen Puls der Länge T hat. Das später von der Sende- und Empfangseinheit 16 aus dem reflektierten Signalzug 24 erzeugte Empfangssignal wird von der Korrelationseinheit 18 mit dem Korrelationscode, also dem gleichen Modulationscode, moduliert, also mit einem offenen Zeitfenster 30 der Länge T. Die Korrelation findet hierbei vielfach hintereinander statt, jeweils mit einem etwas in der Zeit verschobenen Zeitfenster. Es kann ein einziger Signalzug 24 der Empfangsstrahlung $R_X$ mithilfe mehrerer Kanäle vielfach untersucht werden, oder jeder Signalzug 24 wird mit nur einem Empfangskanal nur einmal untersucht, aber bei jedem neuen Signalzug 24 wird das Zeitfenster 30 um eine kleines, vorbestimmtes Zeitintervall verschoben.

Anstelle der Korrelation durch die Korrelationseinheit 18 kann die Korrelation auch bereits innerhalb der Sende- und Empfangseinheit 16 erfolgen, indem die Verarbeitung zum Empfangssignal bereits durch die Korrelation beeinflusst wird. Dies kann beispielsweise durch die Steuerung der Spannung eines Signalverstärkers mit einem Korrelationssignal geschehen, das bereits als Empfangssignal der Korrelation unterworfen ist. Im folgenden Ausführungsbeispiel wird jedoch, ohne dass damit eine Einschränkung der Möglichkeiten verbunden wäre, das Empfangen durch die Sende- und Empfangseinheit 16 und das Korrelieren durch die Korrelationseinheit 18 in zwei Schritten dargestellt.

In dem in FIG 2 dargestellten Ausführungsbeispiel öffnet das Zeitfenster 30 zum Zeitpunkt $t_4$ und schließt zum Zeitpunkt $t_4$ + T. Das Zeitfenster 30 ist also genau so lang wie die Zuglänge T. Während dieser Zeitspanne bewegt sich die reflektierte Empfangsstrahlung $R_X$ auf die Sende- und Empfangseinheit 16 zu und trifft auf diese auf. Zum Zeitpunkt $t_4$ + T sei der reflektierte Signalzug 24 bereits zu einer guten Hälfte auf der Sende- und Empfangseinheit 16 aufgetroffen, wie dies ebenfalls in FIG 2 dargestellt ist. Der schraffierte Bereich des reflektierten Signalzugs 24 wurde bereits empfangen und zum Empfangssignal verarbeitet. Der verbleibende nicht schraffierte Teil wird zwar ebenfalls verarbeitet, wird jedoch von der Korrelationseinheit 18 ausgeblendet, weil er nach dem Schließen des Zeitfensters 30 an der Sende- und Empfangseinheit 16 eingetroffen ist. Der Teil des reflektierten Signalzugs 24, der innerhalb des Zeitfensters 30 empfangen wurde, wird zu einem Messwert 32 aufintegriert, wobei das Integral beispielsweise der schraffierten Fläche aus FIG 2 entspricht.

Im Laufe der Zeit wird von der Sende- und Empfangseinheit 16 eine Vielzahl von Signalzügen 24 ausgesandt. Jeder Signalzug 24 wird in diesem Ausführungsbeispiel mithilfe eines einzigen Empfangskanals zu einem Messwert 32 verarbeitet, der Null sein kann, wenn kein Signal im Zeitfenster 30 empfangen wird.

Die Messwerte 32 sind in FIG 3 in einem Diagramm eingetragen, der die Amplituden der Messwerte 32 aufgetragen gegen die Zeit t zeigt. Zum Zeitpunkt $t_0$ beginnt das Aussenden eines gesendeten Signalzugs 24 in Richtung zum Flugobjekt 4. Zum Zeitpunkt $t_1$ wird

das Zeitfenster 30 zum ersten Mal geöffnet. Es wird jedoch kein Signal empfangen, da der Signalzug 24 noch auf dem Weg zum Flugobjekt 4 ist. Das Zeitfenster 30 schließt ohne ein Signal, der Messwert 32 ist Null.

Zu einem späteren Zeitpunkt $t_2$ wird das Zeitfenster wieder geöffnet. Der Zeitpunkt $t_2$ liegt T + $T_P$ + $T_V$ hinter $t_1$, mit T: Dauer eines Signalzugs, $T_P$: Dauer eine Pause zwischen Signalzügen und $T_V$: Versatzzeit, in der das nächste Zeitfenster 30 im Verhältnis zu den Signalzügen 24 später oder früher liegt. In jedem nachfolgenden Zeitfenster 30 wird also ein Signal von einem nachfolgenden Signalzug 24 gemessen. Der reflektierte Signalzug 24 hat jedoch zum Zeitpunkt $t_2$ + T, also zum Ende des Zeitfensters 30, die Sende- und Empfangseinheit 16 noch nicht erreicht: Wieder wird kein Empfangssignal erzeugt.

Auf diese Weise wird mit einer Vielzahl von Zeitfenstern der Länge T eine Vielzahl von Messwerten 32 aufgenommen, die in FIG 3 dargestellt sind. Zum Zeitpunkt $t_5$ hat der reflektierte entsprechende Signalzug 24 die Sende- und Empfangseinheit 16 fast erreicht, sodass fast die gesamte Empfangsstrahlung $R_X$ während der Öffnungszeit des Zeitfensters 30 die Sende- und Empfangseinheit 16 erreicht, so dass der Messwert 32 sehr groß ist. Beim Zeitpunkt $t_6$ hat der vordere Teil des nächsten reflektierten Signalzugs 24 die Sende- und Empfangseinheit 16 bereits vor Öffnen des Zeitfenstern erreicht und wird nicht gemessen. Der größte Teil des reflektierten Signalzugs 24 trifft jedoch während der Öffnungszeit des Zeitfensters 30 auf die Sende- und Empfangseinheit 16 auf und wird zum Empfangssignal integriert. Entsprechend groß ist der Messwert 32, der dem Zeitpunkt $t_6$ zugeordnet wird.

Wie aus FIG 3 zu sehen ist, bilden die Messwerte 32 eine Messkurve 34, die anhand bekannter mathematischer Methoden durch die Messwerte 32 gelegt werden kann. Dies geschieht durch das Auswertemittel 20, das auch das Maximum der Messkurve 34 bestimmt. Das Maximum der Messkurve 34 liegt im Zeitpunkt $t_L$ und gibt die Laufzeit $T_L = t_L - t_0$ vor. Aus der Laufzeit der ausgesendeten und am Flugobjekt reflektierten Laserstrahlung kann die Entfernung von der Schutzvorrichtung 10 zum Flugobjekt 4 in einfacher Weise errechnet werden.

Bei dem in FIG 2 dargestellten Ausführungsbeispiel ist der Modulationscode die Formung der Signalzüge 24. In FIG 2 ist der Signalzug 24 der Übersichtlichkeit halber nur als gleichförmiges Signal ohne Modulation gezeichnet. Diese Form ist die einfachste Form eines Modulationscodes. Um jedoch eine ausreichende Messgenauigkeit der Entfernungsmessung zu erreichen, wird im Folgenden von einer Modulation gesprochen, wenn eine Struktur, wie regelmäßige oder unregelmäßige Pulse, vorhanden ist mit einer Strukturlänge von unter 1 $\mu$s, insbesondere unter 200 ns. So sollten beispielsweise die Signalzüge 24 selbst moduliert sein, oder - wenn keine trennbaren Signalzüge 24 vorliegen - eine entsprechende hochfrequente Struktur vorhanden sein.

Die Zeitfenster 30 entsprechen einer Signalzuglänge. Wird die Modulation als $T_X$ bezeichnet und die Form der reflektierten Strahlung $R_X$, so kann die Korrelation S in einer einfachen Ausführungsform als Integral während der Zeitdauer des Pulszugs 24 über die modulierte Sendestrahlung $T_X$ multipliziert mit der Empfangsstrahlung $R_X$ bezeichnet werden:

$$S = \int T_X R_X dt$$

Die Messgenauigkeit kann durch eine Modulation innerhalb der Signalzüge 24 erheblich gesteigert werden. Bei einer solchen Modulation werden also eine Vielzahl von Signalzügen 24 ausgesendet, reflektiert und empfangen, wobei die Zuglänge T konstant sein oder variieren kann. Sie ist jedoch stets vorgegeben, so dass sie bei der Korrelation berücksichtigt wird, die Korrelation also in Abhängigkeit von der Zuglänge T erfolgt. Allerdings können mehrere Signalzüge 24 lückenlos ineinander übergeben. Der Messwert 32 für jeden Signalzug 24 wird durch die Summierung beziehungsweise Integration des Eingangsignals über das Zeitfenster 30 beziehungsweise die Länge T des Zeitfensters 30 ermittelt.

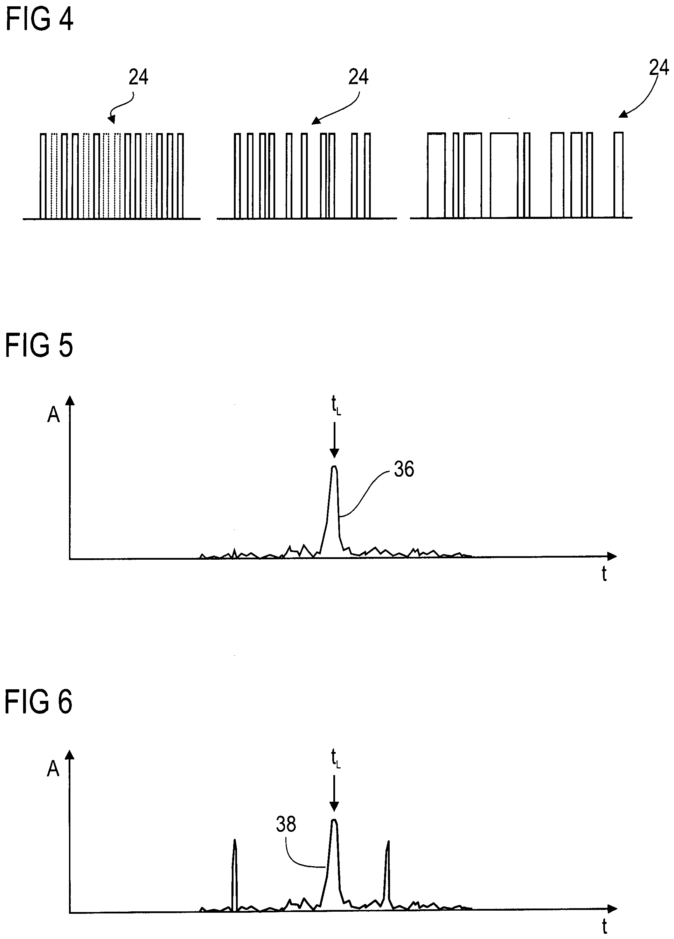

Jedem Signalzug 24 ist eine Modulation mit einem Modulationscode aufgeprägt, der aus einer Vielzahl von Pulsen besteht. FIG 4 zeigt drei verschiedene Signalzüge 24 mit verschiedenen Arten von Modulationscodes. Alle Signalzüge 24 weisen eine Vielzahl von Pulsen gleicher Amplitude auf. Der linke Signalzug 24 besteht nur aus gleichen Pulsen, die zudem in einem äquidistanten Zeitraster angeordnet sind. Allerdings ist nicht an jedem Rasterzeitpunkt ein Puls vorhanden, es sind also Pulse ausgelassen. Der mittlere Signalzug 24 besteht ebenfalls ausschließlich aus gleichen Pulsen, deren Abstand zueinander jedoch unregelmäßig ist. Der rechte Signalzug 24 umfasst verschieden lange Pulse, die zudem einen unregelmäßigen Abstand zueinander aufweisen. Selbstverständlich ist es auch möglich, die Pulslänge unregelmäßig und die Abstände gleichmäßig zu gestalten. Auf eine Darstellung eines solchen Modulationscodes wurde der Übersichtlichkeit halber verzichtet. Anstelle der rechteckigen Form der Pulse können andere Formen verwendet werden. Eine Anzahl von Signalzügen 24 ist zweckmäßigerweise aus stets gleichen Signalzügen 24 aufgebaut, also aus nur einer Art von Modulationscode und stets dem gleichen Modulationscode. Stets wird die Empfangsstrahlung $R_X$ mit dem Korrelationscode korreliert, der dem Modulationscode gleicht, der die Sendestrahlung $T_X$ moduliert hat. Die Korrelation geschieht durch die Multiplikation $T_X R_X$.

FIG 5 zeigt ein Korrelationssignal 36 mit der Amplitude A aufgetragen gegen die Zeit. Das Korrelationssignal 36 besteht aus einer Vielzahl von Messwerten 32, die aus jeweils einem Signalzug 24 gewonnen wurden, der mit dem Korrelationscode korreliert wurde. Der Korrelationscode wurde dabei von Messwert zu Messwert jeweils um die Versatzzeit $T_V$ verschoben. Die Messwerte sind in FIG 5 entsprechend der zeitlichen Verschiebung des Korrelationscodes zum Modulationscode beim Aussendezeitpunkt $t_0$ aufgetragen. Die Phase des Korrelationscodes zum erzeugenden Modulationscode wurde also bei jedem Signalzug 24 immer ein Stückchen weiter zueinander verschoben. Der Modulationscode wurde der Messstrahlung aufgeprägt und diese benötigt die Laufzeit $T_L$, um wieder beim Empfänger anzukommen.

Sind der Modulationscode der eintreffenden Messstrahlung und der Korrelationscode außer Phase, so ist das Korrelationsergebnis bei diesem Signalzug in der Regel ein kleiner Wert, der ein Teil eines Rauschens ist, wie auf beiden Seiten des in FIG 5 dargestellten Maximums gezeigt ist. Sind die Signale etwas oder ganz außer Phase, wird ein Teil der Empfangsstrahlung $R_X$ ausgeblendet. Erst wenn der Modulationscode der eintreffenden Messstrahlung und Korrelationscode genau in Phase sind, so entsteht kein Signalverlust und es entsteht das Maximum des Korrelationssignals 36, wie in FIG 5 dargestellt ist. Die gesamte Versatzzeit $T_V$ zwischen dem Modulationscode zum Zeitpunkt der Aussendung und dem Korrelationscode entspricht im Maximum der Laufzeit $T_L$. Um die genaue Entfernung zu bestimmen, ist es ausreichend, nur um den Zeitpunkt $t_L$ herum zu messen, in dem der Korrelationscode exakt in Phase mit dem Modulationscode des Empfangssignals ist. Die maximale Spitze zum Zeitpunkt $t_L$ kann sehr exakt erfasst und die Entfernung somit sehr exakt bestimmt werden. Der entsprechend resultierende Peak ist schmal, hoch und somit einfach auswertbar. Je hochfrequenter der Modulationscode ist, desto schmaler ist der Peak und desto genauer lässt sich die Entfernung bestimmen.

Um die Entfernung des Flugobjekts 4 eindeutig bestimmen zu können, ist die Länge der Signalzüge 24 bzw. das Zeitintervall zwischen den Anfängen der Signalzüge so groß zu wählen, dass die Laufzeit innerhalb einer Maximalentfernung eindeutig bestimmbar ist. Bei einer angenommenen maximalen Entfernung $x_{max}$ des Flugobjekts 4 von 6 km ist also ein Zeitintervall $T_{max} \geq$ 2x $(x_{max}/c)$ = 2x $(6x10^3$ ms / $3x10^8$ m) = $4x10^{-5}$ s zu wählen.

Um auch bei extrem schwacher Reflexion am Flugobjekt 4 zu einem auswertbaren Korrelationssignal 36 zu kommen, können mehrere gleichphasige Messsignale addiert werden. Dies kann dazu führen, dass eine Entfernungsmessung relativ lange dauert, da sehr viele Signalzüge 24 ausgewertet werden müssen. Gerade wenn das Flugobjekt 4 bereits nah am Schutzobjekt 2 ist, kann dies nachteilig sein. Allerdings kann bei einem nahen Flugobjekt 4 auch der Eindeutigkeitsbereich verkleinert werden, so dass die Länge T der Signalzüge 24 verringert werden kann. Dies kann geschehen, indem die Signalzüge 24 verändert werden. Besonders vorteilhaft ist der Modulationscode jedoch so gebildet, dass die Korrelation von Modulationscode mit Korrelationscode zu mehreren Maxima führt. Dies ist beispielhaft in FIG 6 dargestellt.

FIG 6 zeigt analog zu FIG 5 ein Korrelationssignal 38 mit der Amplitude A aufgetragen gegen die Zeit. Die Korrelation führt zu drei Maxima, von denen zwei in diesem Beispiel unsymmetrisch um das Hauptmaximum liegen. Die Lage der Maxima zueinander ist aus der Gestaltung des Modulationscodes bekannt. Ist die Entfernung des Flugobjekts 4 unter einem Grenzwert, der von der Lage der Maxima zueinander abhängt, so kann bereits das in FIG 6 gezeigte Korrelationssignal 38 mit sich selbst addiert werden. Hierzu werden alle Nebenmaxima auf das Hauptmaximum aufaddiert, so dass ein stärkeres Gesamtsignal am Ort des Hauptmaximums entsteht. Hierfür bestehen grundsätzlich zwei Möglichkeiten: Bei der ersten Möglichkeit wird das Korrelationssignal 38 aufaddiert, und zwar so weit in der Zeitachse versetzt, dass das linke Nebenmaximum im Hauptmaximum zu liegen kommt. Entsprechend kann auch eine weitere Kopie des Korrelationssignals 38 erzeugt werden und in der Zeitachse von FIG. 6 so weit nach links verschoben werden, dass das rechte Nebenmaximum im Hauptmaximum zu liegen kommt. Das Resultat ist ein Korrelationssignal mit einem sehr starken Hauptmaximum, das auch bei einem schlechten SNR auswertbar ist. Bei der zweiten Möglichkeit wird das Korrelationssignal 38 in drei Signalteile aufgeteilt, wobei jeder Signalteil eines der Maxima enthält. Nun werden die drei Signalteile so zueinander verschoben, dass die Nebenmaxima im Hauptmaximum zu liegen kommen. Entsprechend wird wiederum ein sehr großes und gut auswertbares Hauptmaximum erreicht. Damit erhält man für diesen kürzeren, eindeutigen Entfernungsbereich schneller ein Entfernungssignal mit hohem SNR.

Das Modulationsmittel 14 prägt der Sendestrahlung $T_X$ nicht nur den Modulationscode zur Entfernungsmessung, sondern auch den Störcode zum Stören des Suchers 6 auf. Infofern ist die Sendestrahlung $T_X$ bereits durch den Störcode moduliert. Da die Anforderungen an den Störcode und den Modulationscode jedoch sehr verschieden sind, kann es sein, dass der Störcode nicht als Modulationscode geeignet ist.

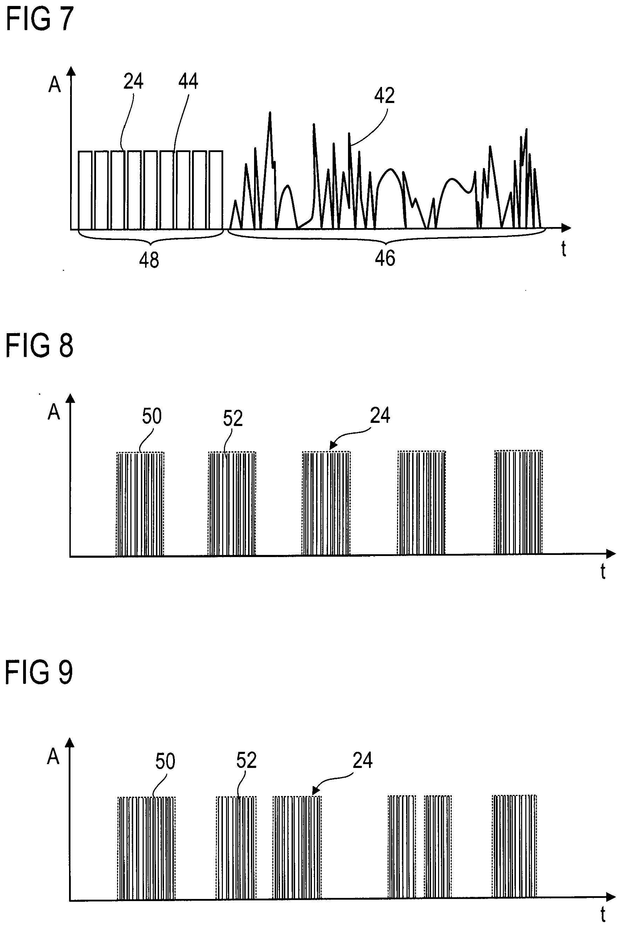

Eine mögliche Lösung dieses Problems ist in FIG 7 dargestellt. Störcode 42 und Modulationscode 44 liegen hintereinander. Der Modulationscode 44 ist hierbei vereinfacht dargestellt, indem jeder Signalzug 24 als ein Puls in FIG 7 zu sehen ist. Die Signalzüge 24 sind jeweils intern moduliert, beispielsweise wie zu den FIG 4 beschrieben, wobei dies der Übersichtlichkeit halber in FIG 7 nicht dargestellt ist. Der Störcode 42 ist ebenfalls nur schematisch dargestellt. Die dargestellte Unregelmäßigkeit soll andeuten, dass die Form des Störcodes 42 beliebig sein kann. In der Regel wird jedoch die Amplitude der Störstrahlung bzw. des Störcodes 42 gleich der der Messstrahlung bzw. des Modulationscodes sein.

Die Zeitfenster 46, 48 für den Störcode 42 beziehungsweise den Modulationscode 44 sind hierbei so gewählt, dass der Störcode 42 höher priorisiert ist als der Modulationscode 44. Es wird also zunächst die Notwendigkeit der Aussendung des Störcodes 42 vorgegeben. Es kann sein, dass bis zu einem geeigneten Zeitpunkts zum Beginn des Aussendens des Störcodes 42 störcodefreie Zeit verbleibt, die zum Aussenden der Messstrahlung verwendet werden kann. Entsprechend wird zunächst im Zeitfenster 48 die Entfernungsmessung durchgeführt. Soll der Störcode 42 gesendet werden, so wird die Sendung des Modulationscode 44 unterbrochen und der Störcode 42 beginnt.

Eventuell ist es auch möglich, den Störcode als Modulationscode zum Modulieren der Messstrahlung zu verwenden. Hierbei dient der Störcode als Modulationscode, so dass Störcode und Modulationscode identisch sind. Störung und Messung können hierbei zeitgleich folgen, so dass beide Vorgänge parallel durchgeführt werden. Gegebenenfalls verändert sich der Störcode im Laufe der Zeit. Da auch mit dem Störcode korreliert wird, ist dies bei der Korrelation zu beachten. Entsprechend muss ein reflektierter Signalzug 24, bzw. dessen Signal der Sende- und Empfangseinheit 16, mit demjenigen Störcode korreliert werden, der als Modulationscode bei der Aussendung des Signalzugs verwendet wurde. Bei einer schnellen Veränderung des Störcodes setzt dies eine grobe Kenntnis der zu messenden Entfernung voraus.

Um diese zu erhalten, kann zunächst eine Entfernungsmessung ohne das Senden des Störcodes erfolgen, z.B. wie zu FIG 7 beschrieben ist. Ist die grobe Entfernung bekannt, kann bei der späteren Korrelation aus der Laufzeit der Signalzüge zum und vom Flugobjekt 4 derjenige Störcode ermittelt werden, der als Modulationscode verwendet wurde und nun als Korrelationscode verwendet werden muss. So läuft beispielsweise der Störcode mit dem entsprechenden Laufzeitversatz in der Korrelationseinheit 18 nach, also hinter dem Modulationscode.

FIG 8 zeigt ein weiteres Ausführungsbeispiel, bei dem Modulationscode und Störcode parallel und mit einer Strahlung gesendet werden, die Störstrahlung also gleich der Messstrahlung ist. In diesem Beispiel ist der Störcode 50, der in FIG 8 zur Verdeutlichung gestrichelt dargestellt ist, jedoch nicht als Modulationscode geeignet, beispielsweise weil er zumindest bereichsweise zu niederfrequent ist. In diesem Ausführungsbeispiel besteht der Störcode 50 aus regelmäßigen Pulsen, die jeweils aus Pulsen des Modulationscodes 52 zusammengesetzt sind. Der Störcode 50 ist also niederfrequenter als der Modulationscode 52. Der Modulationscode 52 kann hierbei vom Störcode 50 überlagert werden, so dass das Muster der Sendestrahlung $T_X$ sowohl den niederfrequenten Störcode 50 als auch den höherfrequenten Modulationscode 52 enthält. Der Modulationscode 52 sollte hierbei in Frequenz und Amplitude so gewählt werden, dass er die Störung des Suchers 6 nicht oder nur in vertretbarem Maße beeinflusst.

Jeder Puls des Störcodes 50 kann einen Signalzug 24 des Modulationscodes 52 bilden. Ist die Zeitdauer eines Störcodepulses jedoch ungünstig, so kann er auch mehrere Signalzüge 24 bilden, oder ein Signalzug 24 ist aus mehreren Störcodepulsen zusammengesetzt.

FIG 9 zeigt ein Ausführungsbeispiel mit unregelmäßigen Störcodepulsen. Die Unregelmäßigkeit besteht in unregelmäßigen Abständen zwischen den Pulsen und - wenngleich eher selten angewandt - aus unregelmäßigen Pulslängen. Auch hier bilden die Störcodepulse Signalzüge 24, die jedoch verschieden zueinander sind. Entsprechend verändert sich der Modulationscode 52, und entsprechend ist auch der Korrelationscode von Signalzug 24 zu Signalzug 24 anzupassen.

Bezugszeichenliste

| | |
|---|---|
| 2 | Schutzobjekt |
| 4 | Flugobjekt |
| 6 | Sucher |
| 8 | Triebwerk |
| 10 | Schutzvorrichtung |
| 12 | Lasereinheit |
| 14 | Modulationsmittel |
| 16 | Sende- und Empfangseinheit |
| 18 | Korrelationseinheit |
| 20 | Auswertemittel |
| 22 | Steuereinheit |
| 24 | Signalzug |
| 26 | Pfeil |
| 28 | Pfeil |
| 30 | Zeitfenster |
| 32 | Messwert |
| 34 | Messkurve |
| 36 | Korrelationssignal |
| 38 | Korrelationssignal |
| 42 | Störcode |
| 44 | Modulationscode |
| 46 | Zeitfenster |
| 48 | Zeitfenster |
| 50 | Störcode |
| 52 | Modulationscode |
| 54 | Frequenzband |

| | |
|---|---|
| T | Zuglänge |
| $T_X$ | Sendestrahlung |
| $R_X$ | Empfangsstrahlung |
| $T_L$ | Laufzeit |
| $T_V$ | Versatzzeit |

**Patentansprüche**

1. Verfahren zum Schützen eines Schutzobjekts (2) gegen Angriffe eines anfliegenden Flugobjekts (4), das einen Sucher (6) aufweist, bei dem

    - eine Lasereinheit (12) auf das Flugobjekt (4) gerichtet wird und die Lasereinheit (12) Störstrahlung mit einem Störcode (50) sendet, der eine Zielerfassung des Suchers (6) stört, und
    - die Lasereinheit (12) mit einem Modulationscode (52) modulierte Messstrahlung zum Flugobjekt (4) sendet, vom Flugobjekt (4) reflektierte Messstrahlung erfasst, mit dem Modulationscode (52) korreliert und aus der Korrelation auf die Entfernung zum Flugobjekt (4) rückgeschlossen wird,

    **dadurch gekennzeichnet, dass**

    - das Stören der Zielerfassung durch ein Täuschen des Suchers (6) erreicht wird,
    - die Messstrahlung in einer Vielzahl von Signalzügen gesendet wird, der Modulationscode (52) eine Modulation der Messstrahlung in Form einer Vielzahl von hintereinander gesendeten Signalen in zusammenhängenden Signalzügen ist, und
    - der Störcode (50) als Modulationscode (52) verwendet wird, wobei Störstrahlung und Messstrahlung eins sind.

2. Verfahren nach Anspruch 1,
   **dadurch gekennzeichnet,**
   **dass** die Messstrahlung von einem Halbleiterlaser gesendet wird.

3. Verfahren nach einem der vorhergehenden Ansprüche,
   **dadurch gekennzeichnet,**
   **dass** eine Pulsfrequenz des Modulationscodes zumindest 500 kHz, insbesondere zumindest 1 MHz beträgt.

4. Verfahren nach einem der vorhergehenden Ansprüche,
   **dadurch gekennzeichnet,**
   **dass** die reflektierte Messstrahlung der Vielzahl von Signalzügen (24) korreliert und das Korrelationsergebnis der Signalzüge (24) summiert wird.

5. Verfahren nach einem der vorhergehenden Ansprüche,
   **dadurch gekennzeichnet,**
   **dass** der Modulationscode (52) eine unregelmäßige Modulation aufweist.

6. Verfahren nach einem der vorhergehenden Ansprüche,
   **dadurch gekennzeichnet,**
   **dass** der Modulationscode Rechteckpulse gleicher Amplitude aufweist, die in Pulslänge und Pulsbeginnabständen variieren.

7. Verfahren nach einem der vorhergehenden Ansprüche,
   **dadurch gekennzeichnet,**
   **dass** zunächst eine Entfernungsmessung ohne das Senden des Störcodes (50) erfolgt und dann die Entfernung aus der Reflexion der Störstrahlung bestimmt wird.

8. Schutzvorrichtung (10) zum Schützen eines Schutzobjekts (2) gegen einen Angriff eines anfliegenden Flugobjekts (4), die eine Lasereinheit (12), ein Modulationsmittel (14) zum Aufmodulieren eines Störcodes (50) auf von der Lasereinheit (12) erzeugte Laserstrahlung zum Stören einer Zielerfassung eines Suchers (6) des anfliegenden Flugobjekts (4) und ein Auswertemittel (20) umfasst, wobei das Modulationsmittel (14) dazu vorbereitet ist, einen Modulationscode (52) auf von der Lasereinheit (12) erzeugte Laserstrahlung aufzumodulieren und das Auswertemittel (20) dazu vorbereitet ist, vom Flugobjekt (4) reflektierte Messstrahlung zu erfassen und mit dem Modulationscode (52) zu korrelieren und aus der Korrelation auf die Entfernung zum Flugobjekt (6) zurückzuschließen, **dadurch gekennzeichnet, dass**

- das Stören der Zielerfassung durch ein Täuschen des Suchers (6) erreicht wird,
- die Messstrahlung in einer Vielzahl von Signalzügen gesendet wird, der Modulationscode (52) eine Modulation der Messstrahlung in Form einer Vielzahl von hintereinander gesendeten Signalen in zusammenhängenden Signalzügen ist, und
- der Störcode (50) als Modulationscode (52) verwendet wird, wobei Störstrahlung und Messstrahlung eins sind.

**Claims**

1. Method for protecting a protected object (2) against attacks by an incoming flying object (4) that has a seeker (6), with which

- a laser unit (12) is aimed at the flying object (4) and the laser unit (12) transmits interference radiation with an interference code (50) that interferes with the target acquisition of the seeker (6), and
- the laser unit (12) sends measurement radiation modulated with a modulation code (52) to the flying object (4), detects measurement radiation reflected from the flying object (4), correlates this with the modulation code (52) and the distance to the flying object (4) is inferred from the correlation,
**characterized in that**
- the interference with the target acquisition is achieved by deceiving the seeker (6),
- the measurement radiation is sent in a number of signal trains, the modulation code (52) is a modulation of the measurement radiation in the form of a number of consecutively sent signals in contiguous signal trains, and
- the interference code (50) is used as the modulation code (52), wherein the interference radiation and the measurement radiation are the same thing.

2. Method according to Claim 1,
**characterized in that**
the measurement radiation is sent by a semiconductor laser.

3. Method according to any one of the preceding claims,
**characterized in that**
a pulse frequency of the modulation code is at least 500 kHz, in particular at least 1 MHz.

4. Method according to any one of the preceding claims,
**characterized in that**
the reflected measurement radiation of the number of signal trains (24) is correlated and the correlation result of the signal trains (24) is summed.

5. Method according to any one of the preceding claims,
**characterized in that**
the modulation code (52) has irregular modulation.

6. Method according to any one of the preceding claims,
**characterized in that**
the modulation code has rectangular pulses of equal amplitude, which vary in pulse length and pulse start intervals.

7. Method according to any one of the preceding claims,
**characterized in that**
a distance measurement is first carried out without sending the interference code (50) and then the distance is determined from the reflection of the interference radiation.

8. Protective device (10) for protecting a protected object (2) against an attack of an incoming flying object (4), which comprises a laser unit (12), a modulation device (14) for modulating an interference code (50) onto laser radiation generated by the laser unit (12) to interfere with the target acquisition by a seeker (6) of the approaching flying object (4) and an evaluation means (20), wherein the modulation device (14) is prepared to modulate a modulation code (52) onto laser radiation generated by the laser unit (12) and the evaluation means (20) is prepared to capture the measured radiation reflected by the flying object (4) and to correlate it with the modulation code (52) and to infer the distance to the flying object (6) from the correlation, **characterized in that**

- the interference with the target acquisition is achieved by deceiving the seeker (6),
- the measurement radiation is sent in a number of signal trains, the modulation code (52) is a modulation of the measurement radiation in the form of a large number of consecutively sent signals in contiguous signal trains, and
- the interference code (50) is used as the modulation code (52), wherein the interference radiation and the measurement radiation are the same thing.

## Revendications

1. Procédé de protection d'un objet à protéger (2) contre les attaques d'un objet volant (4) qui possède une tête chercheuse (6), avec lequel

- une unité à laser (12) est orientée sur l'objet volant (4) et l'unité à laser (12) émet un rayonnement parasite avec un code parasite (50) qui perturbe une acquisition de cible de la tête chercheuse (6), et
- l'unité à laser (12) émet vers l'objet volant (4) un rayonnement de mesure modulé avec un code de modulation (52), détecte le rayonnement de mesure réfléchi par l'objet volant (4), le corrèle avec le code de modulation (52) et la distance par rapport à l'objet volant (4) étant déduite de la corrélation,
**caractérisé en ce que**
- la perturbation de l'acquisition de cible est obtenue par un leurre de la tête chercheuse (6),
- le rayonnement de mesure est émis dans une pluralité de trains de signaux, le code de modulation (52) est une modulation du rayonnement de mesure sous la forme d'une pluralité de signaux émis les uns derrière les autres dans des trains de signaux continus, et
- le code parasite (50) est utilisé comme code de modulation (52), le rayonnement parasite et le rayonnement de mesure étant un seul et même rayonnement.

2. Procédé selon la revendication 1, **caractérisé en ce que** le rayonnement de mesure est émis par un laser à semiconducteur.

3. Procédé selon l'une des revendications précédentes, **caractérisé en ce qu'**une fréquence d'impulsions du code de modulation est au moins égale à 500 kHz, de préférence au moins à 1 MHz.

4. Procédé selon l'une des revendications précédentes, **caractérisé en ce que** le rayonnement de mesure réfléchi corrèle la pluralité de trains de signaux (24) et le résultat de la corrélation des trains de signaux (24) est additionné.

5. Procédé selon l'une des revendications précédentes, **caractérisé en ce que** le code de modulation (52) présente une modulation irrégulière.

6. Procédé selon l'une des revendications précédentes, **caractérisé en ce que** le code de modulation possède des impulsions rectangulaires de même amplitude qui varient en longueur d'impulsions et en écarts de début d'impulsion.

7. Procédé selon l'une des revendications précédentes, **caractérisé en ce qu'**une mesure de distance est tout d'abord effectuée sans émettre le code parasite (50) et ensuite la distance est déterminée à partir de la réflexion du rayonnement parasite.

8. Dispositif (10) de protection d'un objet à protéger (2) contre une attaque d'un objet volant (4) en vol d'approche, comprenant une unité à laser (12), un moyen de modulation (14) destiné à superposer par modulation un code parasite (50) au rayonnement laser généré par l'unité à laser (12) en vue de perturber une acquisition de cible d'une tête chercheuse (6) de l'objet volant (4) en vol d'approche et un moyen d'interprétation (20), le moyen de modulation (14) étant préparé pour superposer par modulation un code de modulation (52) au rayonnement laser généré par l'unité à laser (12) et le moyen d'interprétation (20) étant préparé pour détecter le rayonnement de mesure réfléchi par l'objet volant (4) et le corréler avec le code de modulation (52) et déduire la distance par rapport à l'objet volant (6) à partir de la corrélation,
**caractérisé en ce que**

- la perturbation de l'acquisition de cible est obtenue par un leurre de la tête chercheuse (6),
- le rayonnement de mesure est émis dans une pluralité de trains de signaux, le code de modulation (52) est une modulation du rayonnement de mesure sous la forme d'une pluralité de signaux émis les uns derrière les autres dans des trains de signaux continus, et
- le code parasite (50) est utilisé comme code de modulation (52), le rayonnement parasite et le rayonnement de mesure étant un seul et même rayonnement.

FIG 1

FIG 2

FIG 3

FIG 4

FIG 5

FIG 6

FIG 7

FIG 8

FIG 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20120068874 A1
- DE 4124428 A1